# DEMANDE DE BREVET EUROPEEN

(11) **EP 0 742 119 A1**
(43) Date de publication de la demande: **13.11.1996**
(21) Numéro de dépôt: 96400970.8
(22) Date de dépôt: 07.05.1996
(51) Int. Cl.: B60P 3/355

(54) **Véhicule extensible permettant de réaliser des enceintes modulaires**

(30) Priorité: 10.05.1995 FR 9505694
(71) Demandeur: Fauveau, Bernard, 75014 Paris (FR)
(72) Inventeur: Fauveau, Bernard, 75014 Paris (FR)
(74) Mandataire: de Saint-Palais, Arnaud Marie

(57) **Abrégé**

Le véhicule selon l'invention comprend un plateau porté par un châssis (CH) monté sur des roues (E₁, E₂) et, au niveau d'au moins l'un des côtés latéraux, des rails de support et de guidage transversaux rabattables (TC₁ à TC₄ - TC'₁ à TC'₄), munis de piètements de stabilisation (PS), au moins une paroi latérale verticale (PL₁, PL₂) montée sur des chariots (CS) mobiles le long des rails (TC₁ à TC₄ - TC'₁ à TC'₄) de manière à pouvoir occuper une position déployée dans laquelle elle constitue une fraction de l'enceinte à réaliser, au moins un panneau (B₁, B₂) pouvant se disposer sur les rails de manière à constituer une extension de plancher, et une toiture déployable (T), mobile en hauteur, dont le déploiement est commandé par la paroi verticale (PL₁, PL₂). La paroi (PL₁, PL₂) est déployable en hauteur lors de l'élévation de la toiture (T).

L'invention permet de réaliser des salles de spectacle ou d'exposition publique.

## Description

La présente invention concerne un véhicule roulant extensible permettant de réaliser des enceintes modulaires juxtaposables de manière à constituer des locaux mobiles de grandes dimensions utilisables notamment en tant que salles de spectacle ou d'exposition publique.

D'une façon générale, on sait qu'il a déjà été proposé des véhicules extensibles se présentant sous la forme d'un camion dont la partie utilitaire (en arrière de la cabine) présente une forme tubulaire, axée transversalement par rapport à l'axe longitudinal du véhicule.

Cette forme tubulaire loge des éléments télescopiques, sensiblement de mêmes dimensions, pouvant se déployer transversalement de manière à réaliser une salle fermée dont la longueur correspond sensiblement à celle de la partie utilitaire, tandis que la largeur est supérieure à celle du camion.

Cette solution, qui possède l'avantage d'être facilement et rapidement mise en oeuvre, présente l'inconvénient de ne pas permettre une élévation du toit de l'enceinte :
Celle-ci demeure obligatoirement à une hauteur sensiblement égale à celle du toit du camion.

En outre, le déploiement de cette structure demeure limité et ne permet donc pas d'obtenir une extension importante de la surface du camion.

Une autre solution consiste à réaliser un déploiement latéral du plateau du véhicule (de préférence une remorque) de manière à réaliser un plancher surélevé et à ériger autour de ce plancher un chapiteau dont la structure se trouvait initialement repliée à l'intérieur du camion. On constate que cette structure, au demeurant plus complexe à mettre en oeuvre que la précédente, présente en outre l'inconvénient de nécessiter une toile de tente.

De plus, cette solution ne permet pas d'obtenir des enceintes modulaires juxtaposables aptes à réaliser des salles de grandes dimensions présentant une forme homogène et des bonnes proportions.

L'invention a donc plus particulièrement pour but de supprimer cet inconvénient.

Elle propose un véhicule tel que, par exemple, un camion ou une remorque comprenant un plateau porté par un châssis et monté sur des roues.

Selon l'invention, ce véhicule est caractérisé en ce qu'il comprend, au niveau d'au moins l'un de ses côtés latéraux, les équipements suivants :
- au moins deux rails de support et de guidage articulés par l'une de leurs extrémités sur ledit côté de manière à pouvoir occuper une position escamotée rabattue contre le côté latéral du véhicule et une position déployée dans laquelle ils s'étendent à l'horizontale perpendiculairement audit côté, au-dessous du niveau du plateau, chaque rail comprenant, à l'opposé de son articulation sur le véhicule, un piètement de stabilisation réglable en hauteur, destiné à venir prendre appui sur le sol,
- au moins une paroi latérale verticale montée sur des chariots mobiles le long des rails, lorsque ceux-ci sont en position déployée, de manière à pouvoir occuper une position rétractée dans laquelle elle constitue une paroi latérale du véhicule et une position déployée dans laquelle elle constitue au moins une fraction de la paroi de l'enceinte que l'on désire réaliser,
- au moins un panneau pouvant se disposer en appui sur les rails, dans le prolongement du plateau, de manière à constituer une extension de plancher dans l'espace délimité par les rails,
- une toiture portée par une charpente comprenant au moins deux traverses horizontales déployables télescopiquement, dont les extrémités mobiles sont reliées à la partie supérieure de la paroi mobile et une couverture déployable dont le bord longitudinal extérieur est relié à la partie supérieure de la paroi mobile, cette couverture prenant appui sur lesdites traverses en position déployée.

Avantageusement, la susdite paroi latérale verticale pourra être conçue de manière à être déployable en hauteur. Dans ce cas, la susdite charpente pourra être supportée par une structure mobile en hauteur, des moyens étant alors prévus pour provoquer une élévation du toit avec simultanément un déploiement de la paroi.

De même, le susdit panneau pourra comprendre un élément de panneau articulé le long d'un bord longitudinal du plateau de manière à pouvoir occuper une position verticale en appui contre la face intérieure de la paroi, lorsque celle-ci est en position rétractée, et une position rabattue à l'horizontale, en appui sur les susdits rails pour constituer la susdite extension de plancher. Ce panneau pourra être constitué de deux ou plusieurs éléments repliables en accordéon, et pouvant occuper les deux positions précitées.

Bien entendu, les deux côtés latéraux du véhicule pourront être équipés de la façon précédemment décrite.

Dans ce cas, on obtient une enceinte de grandes dimensions pouvant être juxtaposée, au niveau de sa face arrière, avec une autre enceinte de même type.

Un avantage important de la structure précédemment décrite consiste en ce qu'elle est déployable à l'aide de moyens d'actionnements tels que des vérins ou des systèmes à câble et à poulie de renvoi entraînés par moteurs.

De ce fait, la mise en place d'une enceinte de grandes dimensions peut être obtenue aisément, dans des temps très courts, sous la commande d'un seul opérateur.

Ainsi, compte tenu de sa mobilité et du fait qu'elle n'exige pas de préparation de son aire d'accueil ni de détérioration de celle-ci (pas d'enfoncement de pieux ou analogue), cette structure présente une grande flexibilité d'emploi et permet d'atteindre des taux de rendement élevés.

Un mode d'exécution de l'invention sera décrit ci-après, à titre d'exemple non limitatif, avec référence aux dessins annexés dans lesquels :
La figure 1 est une vue en perspective d'un véhicule selon l'invention se présentant sous la forme de la remorque d'un camion semi-remorque de type classique ;
La figure 2 est une vue en perspective avec écorché partiel d'une enceinte obtenue par la juxtaposition de deux remorques du type de celle représentée figure 1 ;
La figure 3 est une coupe transversale schématique de l'enceinte ;

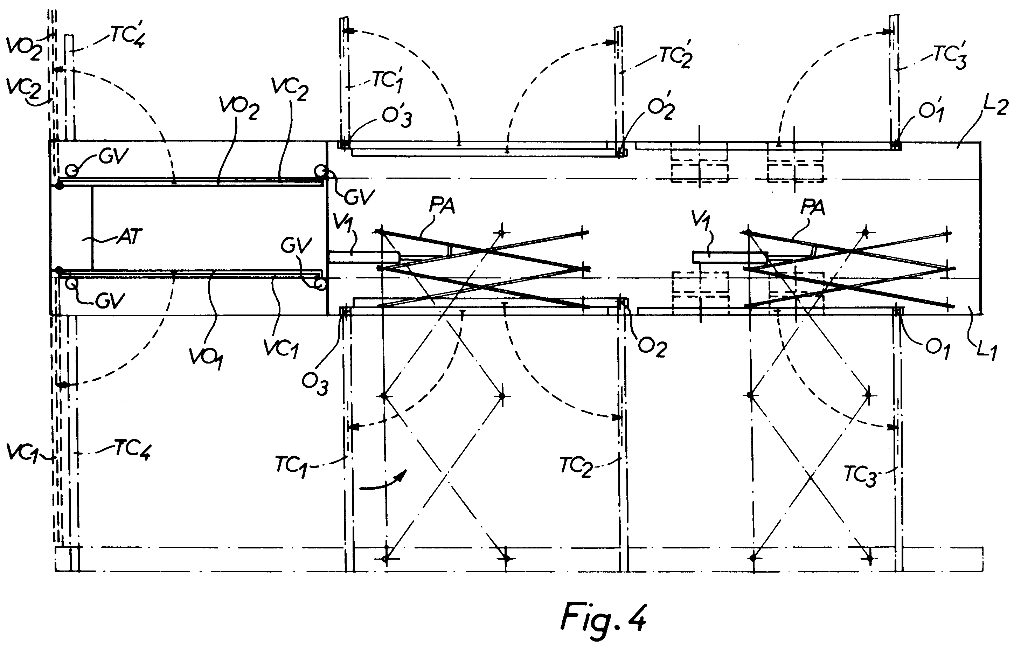

La figure 4 est une coupe horizontale schématique montrant le mécanisme de déploiement des parois latérales du véhicule.

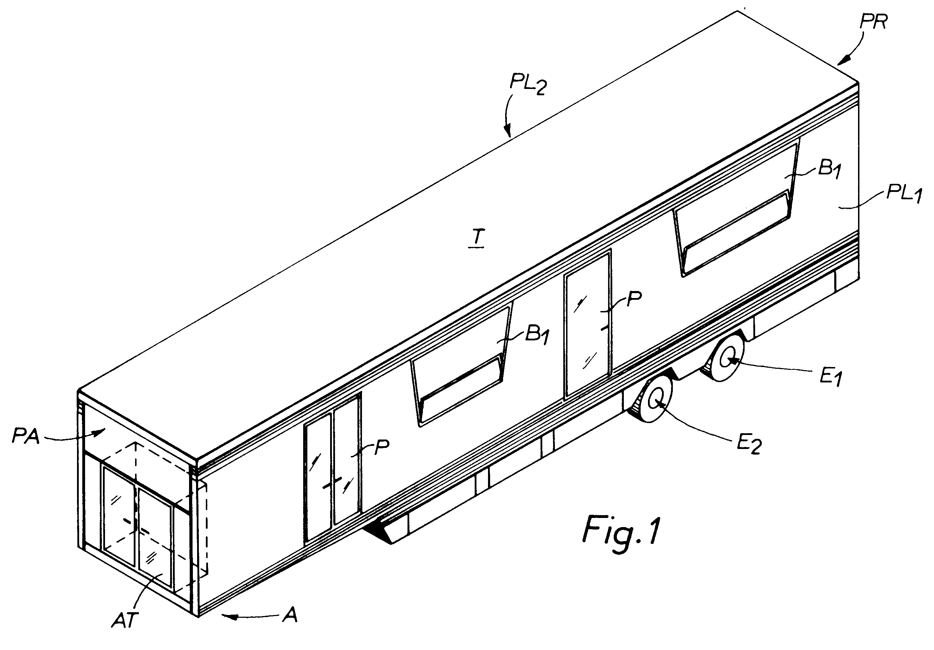

Tel que représenté sur la figure 1, le véhicule selon l'invention se présente sous la forme d'un semi-remorque de type classique présentant un châssis CH porté par un double essieu arrière E₁, E₂ et dont la partie antérieure A, qui est légèrement surélevée est aménagée pour s'accrocher et porter sur la sellette d'attelage d'un tracteur semi-porteur. Cette partie antérieure A comprend deux jambes d'appui télescopiques (non représentées) sur lesquelles le semi-remorque peut reposer lorsqu'il est désattelé.

D'une façon plus précise, à l'état rétracté, ce semi-remorque présente une forme sensiblement parallélépipédique délimitée par deux parois latérales PL₁, PL₂ munies de baies B₁ et de portes P, une paroi arrière PR, une paroi avant PA munie d'une porte donnant sur une armoire technique AT et un toit T.

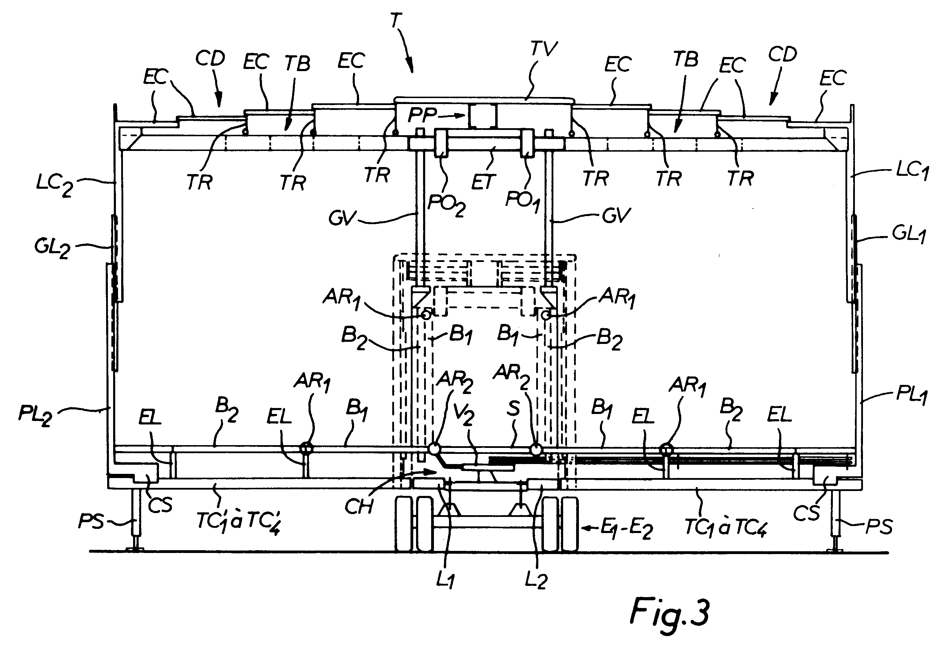

Par ailleurs, le châssis CH supporte un plancher S légèrement surélevé, l'espace entre le châssis CH et le plancher S étant destiné à contenir le mécanisme de déploiement du véhicule (figure 3).

Sur chacun des longerons L₁, L₂ du châssis CH viennent s'articuler, par l'une de leurs extrémités, trois tronçons de rails horizontaux TC₁ à TC₃ et TC'₁ à TC'₃, autour de trois axes verticaux O₁ à O₃ et O'₁ à O'₃ uniformément répartis dans la partie postérieure du châssis CH. Un quatrième tronçon TC₄, TC'₄ peut être manuellement engagé dans un support prévu à l'extrémité antérieure du châssis.

Les tronçons de rails TC₁ à TC₃ et TC'₁ à TC'₃ peuvent occuper une position repliée dans laquelle ils s'étendent parallèlement à l'axe longitudinal du châssis CH (position indiquée en traits pleins) au-dessous des parois latérales PL₁, PL₂, et une position déployée dans laquelle ils s'étendent perpendiculairement par rapport audit axe.

Sur l'extrémité libre de chacun de ces tronçons de rails TC₁ à TC₃ et TC'₁ à TC'₃, de même que sur le tronçon TC₄, TC'₄, est articulé un piètement de stabilisation télescopique PS destiné à venir en appui sur le sol lorsque le tronçon est en position déployée (figure 3).

Ces tronçons TC₁ à TC₄ et TC'₁ à TC'₄ sont conformés de manière à assurer le maintien et le guidage de chariots CS supportant les parois latérales PL₁, PL₂ du véhicule de manière à permettre à ces parois PL₁, PL₂ de se déplacer en translation le long des tronçons de rails TC₁ à TC₄ et TC'₁ à TC'₄ de manière à occuper une position déployée, les chariots CS se trouvant alors en fin de course au niveau des extrémités libres des tronçons TC₁ à TC₄ et TC'₁ à TC'₄.

Ce déplacement en translation des parois latérales PL₁, PL₂ est obtenu au moyen de systèmes d'actionnement à parallélogrammes articulés PA actionnés par un vérin V₁.

En effet, ce système présente l'avantage de multiplier la course du vérin V₁ tout en garantissant le parallélisme de la paroi PL₁, PL₂ au cours de son déplacement.

Dans cet exemple, chaque paroi latérale PL₁, PL₂ est doublée d'une paroi coulissante LC₁, LC₂ guidée au moyen de glissières verticales GL₁, GL₂, de manière à pouvoir occuper une position escamotée, contre la paroi latérale PL₁, PL₂ et une position déployée dans laquelle elle prolonge la paroi latérale L₁, L₂ vers le haut de manière à obtenir un panneau vertical ayant une hauteur sensiblement égale au double de la hauteur de la paroi PL₁, PL₂.

Par ailleurs, les tronçons de rails TC₁ à TC₄ et TC'₁ à TC'₄ servent à supporter, par l'intermédiaire d'entretoises longitudinales EL, un plancher formé, dans cet exemple, par deux panneaux B₁, B₂ articulés l'un à l'autre au niveau de l'une de leurs bordures longitudinales (AR₁), de manière à pouvoir se rabattre l'un contre l'autre, en position verticale, contre la face intérieure de la paroi PL₁, PL₂. Le panneau B₁ est lui-même articulé (articulation AR₂) au niveau de sa bordure longitudinale inférieure, au bord latéral du plancher S.

Ce panneau B₁ est muni d'un levier articulé à la tige d'un vérin V₂ qui commande le passage des panneaux B₁, B₂, de l'état rétracté à un état déployé où ils se trouvent disposés côte à côte en position horizontale, dans le prolongement du plancher S, et inversement de l'état déployé à l'état rétracté.

Le toit T du véhicule se compose d'une charpente comprenant deux poutres longitudinales parallèles PO₁, PO₂ solidarisées par des entretoises ET transversales tubulaires contenant des traverses tubulaires déployables télescopiquement TB. Cet ensemble est monté sur des guides verticaux télescopiques GV solidaires du châssis CH.

En position basse, cette charpente vient porter sur des cadres de support amovibles non représentés, fixés sur le plancher S lorsque le véhicule est à l'état replié et se trouve en mesure de se déplacer. Ces cadres sont ôtés lorsque le véhicule est à l'état déployé et que le toit est en position surélevée.

L'extrémité libre des traverses tubulaires TB est solidarisée à la bordure supérieure de la paroi coulissante LC₁, LC₂ de sorte que le déplacement en translation de la paroi PL₁, PL₂ entraîne le déploiement ou la rétraction des traverses tubulaires TB.

La charpente supporte une couverture pouvant se déployer ou se rétracter et dont la bordure longitudinale extérieure est solidaire de la bordure supérieure de la paroi coulissante LC₁, LC₂.

Dans cet exemple, cette couverture CD est constituée par deux séries d'éléments de couverture EC longitudinaux (une série par côté latéral du véhicule) qui, en position rétractée, se superposent sous un élément central TV qui constitue le toit proprement dit du véhicule. Cette partie centrale TV est solidarisée aux entretoises ET par l'intermédiaire de deux poutres profilées PP de section en forme de C. Ces éléments de couverture EC peuvent coulisser les uns sur les autres pour passer en position déployée, position dans laquelle ils se chevauchent légèrement au niveau de leurs bordures longitudinales. Le passage de la position rétractée à la position déployée ou inversement est commandé par les déplacements en translation de la paroi PL₁, PL₂. En position déployée, les éléments de couverture EC prennent appui sur les traverses grâce à des consoles TR.

La paroi antérieure PA du véhicule fait intervenir deux volets VO₁, VO₂ articulés au niveau de l'une de leurs bordures latérales verticales sur deux bords latéraux verticaux opposés de l'armoire technique AT, de manière à pouvoir prendre une position escamotée dans laquelle ils sont axés parallèlement à l'axe longitudinal du véhicule et une position déployée dans laquelle ils sont axés perpendiculairement audit axe.

Chacun de ces volets VO₁, VO₂ est doublé par un volet coulissant VC₁, VC₂ sensiblement de mêmes dimensions guidé au moyen de glissières verticales de manière à pouvoir atteindre la hauteur de la couverture.

La paroi arrière du véhicule peut, quant à elle, consister en une bâche ou analogue, étant entendu que le véhicule décrit dans cet exemple est destiné à venir s'accoupler par l'arrière avec un autre véhicule et, qu'en conséquence, il n'est guère nécessaire de prévoir une paroi déployable.

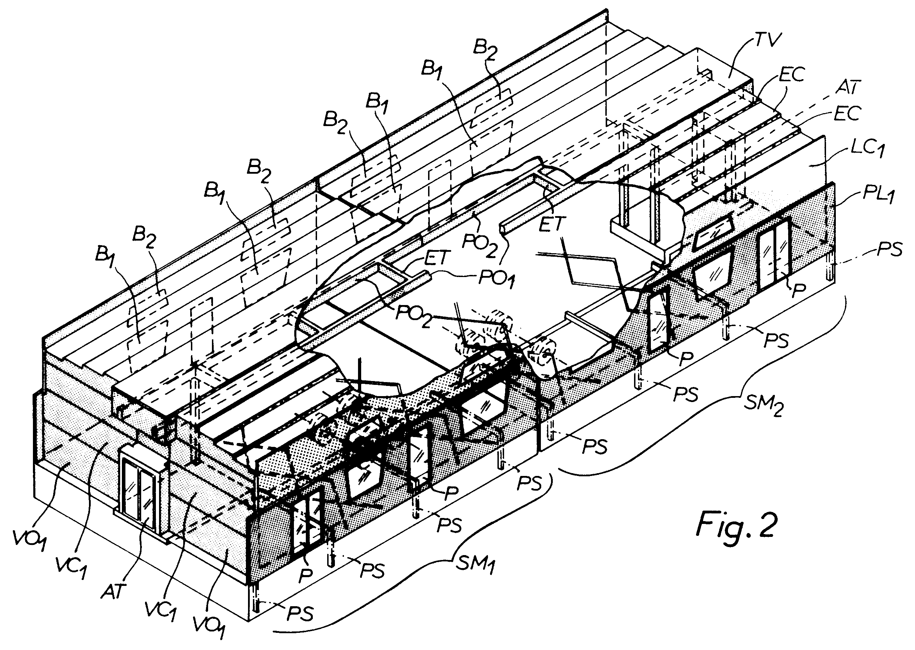

La réalisation d'une enceinte de grandes dimensions du type de celle représentée sur la figure 2 à partir de deux véhicules SM₁, SM₂ du type de celui représenté sur la figure 1 peut s'effectuer comme suit :

Au cours d'une première étape, les deux véhicules SM₁, SM₂ sont disposés "cul à cul" de telle sorte que leurs plateaux S se trouvent en parfaite coïncidence dans un plan horizontal.

A cet effet, chaque véhicule SM₁, SM₂ est muni d'un piètement rétractable formé de quatre vérins hydrauliques permettant de réaliser un isonivelage des deux plateaux et de s'affranchir des suspensions des deux véhicules SM₁, SM₂.

Une fois cet isonivelage réalisé, et les deux véhicules SM₁, SM₂ éventuellement solidarisés l'un à l'autre afin d'éviter toute possibilité de déplacement relatif, l'opérateur peut procéder aux phases de déploiement suivantes :
- une première phase au cours de laquelle il déploie les tronçons de rails TC₁ à TC₃, TC'₁ à TC'₃ situés des deux côtés des véhicules, de manière à les amener à 90° de l'axe longitudinal des véhicules, puis il rabat les piètements de stabilisation PS en les réglant de manière à obtenir un bon appui au sol ; il dispose alors manuellement les tronçons TC₄, TC'₄ et règle les piètements associés à ces tronçons,
- une seconde phase au cours de laquelle il provoque, grâce aux vérins V₁ et aux parallélogrammes articulés PA, un déplacement en translation des parois PL₁, PL₂ jusqu'à ce qu'elles parviennent en fin de course au niveau des extrémités des tronçons de rails TC₁ à TC₄ -TC'₁ à TC'₄ ; au cours de ce déplacement, les parois PL₁, PL₂ provoquent le déploiement des traverses télescopiques TB et des éléments de couverture EC,
- une troisième phase au cours de laquelle il commande, grâce aux vérins V₂ et au levier, le déploiement des éléments de plancher B₁, B₂ qui viennent se disposer sur les tronçons de rails TC₁ à TC₄ - TC'₁ à TC'₄ par l'intermédiaire des entretoises EL,
- une quatrième phase comprenant le pivotement des volets arrière VO₁, VO₂ de manière à les orienter perpendiculairement à l'axe longitudinal des véhicules et la solidarisation des volets coulissants VC₁, VC₂ sur les éléments de toiture EC,
- une cinquième phase comprenant l'élévation de l'ensemble de la charpente et des éléments de couverture EC et ainsi que des éléments mobiles auxquels ils sont solidarisés, tels que les parois coulissantes LC₁, LC₂ et les volets coulissants VC₁, VC₂ ; cette phase d'élévation peut être alors suivie d'une phase de verrouillage en position des principaux éléments et une phase d'extraction des berceaux d'appui de la charpente.

A l'issue de cette cinquième phase, l'enceinte se trouve sous sa forme définitive et il ne reste plus qu'à procéder à des tâches de finition et à l'aménagement intérieur de l'enceinte.

L'accès et la sortie de l'enceinte s'effectuent par les portes P prévues dans les parois latérales PL₁, PL₂. Avantageusement, les baies B₁ prévues dans ces parois sont prolongées par les baies vitrées B₂ prévues en des emplacements appropriés des parois coulissantes LC₁, LC₂.

Bien entendu, l'enceinte ainsi obtenue pourra être aménagée de manière à constituer par exemple une salle de spectacle mobile (théâtre, cinéma) ou une salle d'exposition. Cette salle pourra donc être déplacée et installée de site en site, en des emplacements les plus variés tels que des places, des terrains de sport ou même en pleine campagne, sans nécessiter d'adaptation du lieu et surtout, sans y causer une quelconque détérioration.

## Revendications

1. Véhicule roulant extensible permettant de réaliser des enceintes modulaires juxtaposables de manière à obtenir des locaux mobiles de grandes dimensions, ce véhicule comprenant un plateau porté par un châssis (CH) et monté sur des roues,
caractérisé en ce qu'il comprend, au niveau d'au moins l'un de ses côtés latéraux, les équipements suivants :
- au moins deux rails de support et de guidage (TC₁ à TC₃ - TC'₁ à TC'₃) articulés par l'une de leurs extrémités sur ledit côté de manière à pouvoir occuper une position escamotée, rabattue contre le côté latéral du véhicule, et une position déployée dans laquelle ils s'étendent à l'horizontale perpendiculairement audit côté, au-dessous du niveau du plateau, chaque rail (TC₁ à TC₃ - TC'₁ à TC'₃) comprenant, à l'opposé de son articulation sur le véhicule, un piètement de stabilisation (PS) réglable en hauteur, destiné à venir prendre appui sur le sol,
- au moins une paroi latérale verticale (PL₁, PL₂) montée sur des chariots (CS) mobiles le long des rails (TC₁ à TC₃ - TC'₁ à TC'₃), lorsque ceux-ci sont en position déployée, de manière à pouvoir occuper une position rétractée dans laquelle elle constitue une paroi latérale du véhicule et une position déployée dans laquelle elle constitue au moins une fraction de la paroi de l'enceinte que l'on désire réaliser,
- au moins un panneau (B₁, B₂) pouvant se disposer en appui sur les rails, dans le prolongement du plateau, de manière à constituer une extension de plancher (S) dans l'espace délimité par les rails (TC₁ à TC₃ - TC'₁ à TC'₃),
- une toiture (T) portée par une charpente comprenant au moins deux traverses horizontales (TB) déployables télescopiquement, dont les extrémités mobiles sont reliées à la partie supérieure de la paroi mobile (PL₁, PL₂) et une couverture déployable (CD) dont le bord longitudinal extérieur est relié à la partie supérieure de la paroi mobile (PL₁, PL₂), cette couverture (CD) prenant appui sur lesdites traverses (TB) en position déployée.

2. Véhicule selon la revendication 1,
caractérisé en ce que la susdite paroi latérale (PL₁, PL₂) est déployable en hauteur, et en ce que la susdite charpente est mobile en hauteur, des moyens étant prévus de manière à provoquer une élévation du toit (T) avec, simultanément, un déploiement de ladite paroi (PL₁, PL₂).

3. Véhicule selon l'une des revendications 1 et 2,
caractérisé en ce que la susdite paroi latérale (PL₁, PL₂) est doublée par une paroi coulissante (LC₁, LC₂) guidée au moyen de glissières verticales (GL₁, GL₂), cette paroi coulissante (LC₁, LC₂) étant solidarisée dans sa partie supérieure aux extrémités libres des susdites traverses (TB).

4. Véhicule selon l'une des revendications précédentes,
caractérisé en ce que les déplacements de la susdite paroi latérale (PL₁, PL₂) sont commandés par un mécanisme comprenant un système à parallélogrammes articulés (PA) actionné par un vérin (V₁), ce mécanisme étant logé sous le plateau du véhicule.

5. Véhicule selon l'une des revendications précédentes,
caractérisé en ce que la susdite paroi latérale (PL₁, PL₂) comprend des huisseries (P) et des baies vitrées (B₁), et en ce que la paroi coulissante comprend des baies vitrées (B₂) dans le prolongement des baies (B₁) de la paroi latérale (PL₁, PL₂).

6. Véhicule selon l'une des revendications précédentes,
caractérisé en ce que le susdit panneau comprend au moins un élément de panneau (B₁) articulé le long d'un bord longitudinal du plateau (S), de manière à occuper une position verticale en appui contre la face intérieure de la paroi (PL₁, PL₂), lorsque celle-ci est en position rétractée, et une position rabattue à l'horizontale, en appui sur les susdits rails (TC₁ à TC₄ - TC'₁ à TC'₄) pour constituer la susdite extension de plancher.

7. Véhicule selon la revendication 6,
caractérisé en ce que le susdit élément de panneau comprend plusieurs éléments (B₁, B₂) repliables en accordéon pouvant occuper une position repliée contre la susdite paroi (PL₁, PL₂) et une position déployée en appui sur lesdits rails (TC₁ à TC₄ - TC'₁ à TC'₄).

8. Véhicule selon l'une des revendications 6 et 7,
caractérisé en ce que le susdit élément articulé (B₁) est muni d'un levier actionnable par un vérin (V₂).

9. Véhicule selon l'une des revendications précédentes,
caractérisé en ce que la partie antérieure du véhicule comprend une armoire technique (AT) et, au niveau du susdit côté, au moins un volet (VO₁, VO₂) articulé le long de l'une de ses bordures latérales verticales sur un bord latéral de l'armoire (AT), de manière à pouvoir prendre une position escamotée orientée parallèlement à l'axe longitudinal du véhicule et une position déployée perpendiculaire audit axe.

10. Véhicule selon la revendication 9,
caractérisé en ce que le susdit volet (VO₁, VO₂) est doublé par un volet coulissant (VC₁, VC₂) guidé au moyen de glissières verticales.

11. Véhicule selon l'une des revendications précédentes,
caractérisé en ce que la charpente comprend deux poutres longitudinales parallèles (PO₁, PO₂) solidarisées par des entretoises transversales tubulaires (ET) contenant les susdites traverses déployables télescopiquement (TB).

12. Véhicule selon l'une des revendications précédentes,
caractérisé en ce que la susdite couverture (CD) comprend au moins une série d'éléments de couverture longitudinaux (EC) qui, en position rétractée, se superposent sous un élément central (TV) qui constitue le toit du véhicule et qui est solidarisé à la susdite charpente, ces éléments pouvant coulisser les uns sur les autres pour passer en position rétractée.

13. Véhicule selon l'une des revendications précédentes,
caractérisé en ce qu'il comprend un piètement rétractable comprenant quatre vérins hydrauliques permettant d'effectuer une mise à niveau.

14. Véhicule selon l'une des revendications précédentes,
caractérisé en ce que ses deux côtés comprennent les susdits équipements.

15. Enceinte réalisée à l'aide de deux véhicules selon l'une des revendications précédentes, disposés "cul à cul" et isonivelés dans cette position.
